# EUROPÄISCHE PATENTANMELDUNG

(11) **EP 3 332 861 A1**
(43) Veröffentlichungstag der Anmeldung: **13.06.2018**
(21) Anmeldenummer: 17203879.6
(22) Anmeldetag: 27.11.2017
(51) Int. Cl.: B01D 53/26, B29B 13/06, F26B 21/00

(54) **TROCKENLUFTSYSTEM FÜR GRANULATTROCKNER**

(30) Priorität: 09.12.2016 DE 202016106891 U
(71) Anmelder: Siekman, Marco, 32049 Herford (DE)
(72) Erfinder: Siekmann, Marco, 32049 Herford (DE); Siekmann, Ernst, 32052 Herford (DE)
(74) Vertreter: Ter Meer Steinmeister & Partner

(57) **Zusammenfassung**

Trockenluftsystem für Granulattrockner, mit einem Trockenlufterzeuger (10), einem Trockenluft-Vorlauf (12) zum Einleiten von Trockenluft in einen Trocknungsbehälter (14), einem Trockenluft-Rücklauf (18) zum Zurückleiten von zu regenerierender Trockenluft vom Trocknungsbehälter (14) in den Trockenlufterzeuger (10), und einem im Trockenluft-Rücklauf (18) angeordneten Filter (20), dadurch gekennzeichnet, dass der Filter (20) einen Vorfilter (22) und einen nachgeschalteten Feinfilter (24) mit einer mittleren Porengröße von höchstens 0,3 µm aufweist.

## Beschreibung

Die Erfindung betrifft ein Trockenluftsystem für Granulattrockner, mit einem Trockenlufterzeuger, einem Trockenluft-Vorlauf zum Einleiten von Trockenluft in einen Trocknungsbehälter, einem Trockenluft-Rücklauf zum Zurückleiten von zu regenerierender Trockenluft vom Trocknungsbehälter in den Trockenlufterzeuger, und einem im Trockenluft-Rücklauf angeordneten Filter.

Bei der Herstellung von Kunststoffteilen muss das für die Herstellung einer Kunststoffschmelze benutzte Granulat vor dem Aufschmelzen getrocknet werden. Dazu wird das Granulat in einem Trocknungsbehälter mit Trockenluft begast, die typischerweise eine Temperatur zwischen 40 und 180 °C hat. Für die Herstellung der Trockenluft ist ein Trockenlufterzeuger vorgesehen, in dem die Luft nicht nur temperiert sondern auch mit Hilfe von Entfeuchtungssubstanzen entfeuchtet wird, so dass die Luft, die dann über den Trockenluft-Vorlauf in den Trocknungsbehälter eingeleitet wird, eine innerhalb enger Grenzen vorgegebene Temperatur und einen vorgegebenen Taupunkt hat.

Beim Durchströmen des Trocknungsbehälters nimmt die temperierte Luft Feuchtigkeit sowie Staub und andere Substanzen auf, die in dem Granulat enthalten sind. Die mit Feuchtigkeit und Staub beladene Luft, die noch eine relativ hohe Temperatur hat, wird über den Trockenluft-Rücklauf zum Trockenlufterzeuger zurückgeführt, damit sie dort regeneriert wird. Auf diese Weise wird eine Nutzung der Restwärme ermöglicht und zugleich verhindert, dass die feuchte und warme Luft in die Fabrikationshalle gelangt und beim Personal Gesundheitsschäden hervorruft.

In dem Trocknungsluft-Rücklauf ist ein Patronenfilter angeordnet, der typischerweise eine Maschenweite in der Größenordnung von 3 bis 8 µm hat, so dass die in der zurückgeführten Trockenluft enthaltenen Staubpartikel zurückgehalten werden, andererseits jedoch ein übermäßiger Druckverlust vermieden wird und eine hinreichend lange Standzeit der Filterpatronen erreicht wird, so dass die Filterpatronen nicht allzu häufig gewechselt werden müssen.

Aufgabe der Erfindung ist es, die Wirtschaftlichkeit eines solchen Trockenluftsystems zu verbessern.

Diese Aufgabe wird erfindungsgemäß dadurch gelöst, dass der Filter einen Vorfilter und einen nachgeschalteten Feinfilter mit einer mittleren Porengröße von höchstens 0,3 µm aufweist.

Durch den Feinfilter können aufgrund seiner geringen Porengröße auch feinere Partikel sowie auch gasförmige und flüssige Substanzen zurückgehalten werden, die in der rezirkulierten Trockenluft mitgeführt werden. Die das Granulat bildenden Kunststoffmaterialien enthalten häufig Additive, mit denen bestimmte Eigenschaften des Kunststoffes eingestellt werden sollen. Ein Teil dieser Additive gelangt zumeist im gasförmigen oder flüssigen Zustand in die Trockenluft und in den Filter. Der grobmaschige Filter herkömmlicher Trockenluftsysteme kann diese Substanzen nicht zurückhalten, so dass sie bisher den Filter passieren und sich dann im Trockenlufterzeuger niederschlagen konnten. Dadurch werden im Trockenlufterzeuger ölige oder wachsartige Beläge abgeschieden, die die Wände und Einbauten des Trockenlufterzeugers verunreinigen und die Entfeuchtungssubstanzen vergiften, so dass deren Standzeit abnimmt. Nach längerer Betriebsdauer können die wachsartigen Beläge im Trockenlufterzeuger eine solche Dicke erreichen, dass sich Teile dieser Beläge ablösen und dann mit der Trockenluft in das Granulat gelangen und dieses verunreinigen, so dass fehlerhafte Kunststoffprodukte entstehen. Weiterhin können sich die Additive im Trockenlufterzeuger auch auf Temperaturfühlern und sonstigen Sensoren niederschlagen und deren Messgenauigkeit beeinträchtigen, so dass die Vorgaben für die Temperatur und den Taupunkt der Trockenluft nicht mehr präzise eingehalten werden können.

Bei dem erfindungsgemäßen Trockenluftsystem werden die Additive in dem engmaschigen Feinfilter wirksam zurückgehalten, so dass der Aufbau von Ablagerungen im Trockenlufterzeuger deutlich reduziert wird. Der herkömmliche Patronenfilter wird als Staubfilter beibehalten und schützt nun den Feinfilter gegen Staubeintrag, so dass der Feinfilter sich nicht zu schnell zusetzt.

Zwar muss bei einem erfindungsgemäßen System der Feinfilter häufiger gewechselt werden, doch ist der damit verbundene Arbeits- und Zeitaufwand deutlich geringer als bisher der Aufwand für die Reinigung des Trockenlufterzeugers. Außerdem trägt auch die längere Standzeit der Entfeuchtungssubstanzen zu einer höheren Wirtschaftlichkeit bei. Überdies wird eine Qualitätssteigerung erreicht, da Messfehler bei der Überwachung der Beschaffenheit der Trockenluft vermieden werden und auch der Eintrag von Brocken des wachsartigen Niederschlages in das Granulat vermieden wird.

Vorteilhafte Ausgestaltungen und Weiterbildungen der Erfindung sind in den Unteransprüchen angegeben.

In einer vorteilhaften Ausführungsform hat der Feinfilter eine mittlere Porengröße von 0,15 µm oder weniger, beispielsweise etwa 0,1 µm. Der Feinfilter wird in einer vorteilhaften Ausführungsform durch dicht gepackte Glasfasern gebildet, beispielsweise durch Glasfaserbündel, deren Fasern ähnlich wie die Fasern in einem Zigarettenfilter vorwiegend in Strömungsrichtung des Mediums verlaufen.

Im folgenden wird ein Ausführungsbeispiel anhand der Zeichnung näher erläutert.

Es zeigen:
- Fig. 1: zeigt eine schematische Ansicht einer Granulat-Trocknungsanlage mit einem erfindungsgemäßen Trockenluftsystem; und
- Fig. 2: einen Filter für eine Anlage gemäß einem anderen Ausführungsbeispiel.

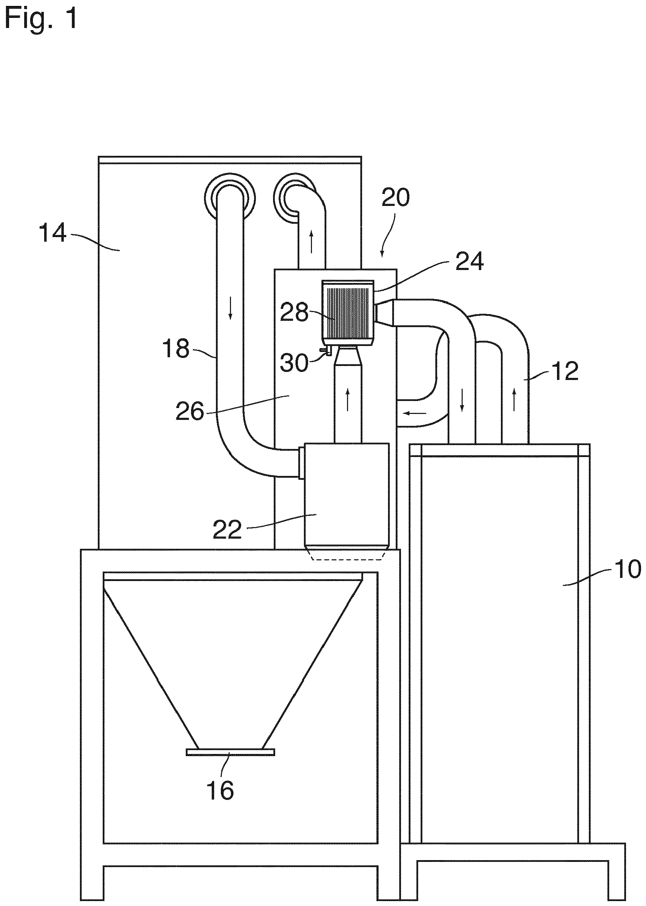

Das Trockenluftsystem gemäß Fig. 1 weist einen Trockenlufterzeuger 10 bekannter Bauart auf, der erhitzte und entfeuchtete Trockenluft erzeugt, die über einen Trockenluft-Vorlauf 12 in einen Trocknungsbehälter 14 geleitet wird. Der Trocknungsbehälter 14 kann von oben mit Granulat beschickt werden und hat einen trichterförmigen unteren Teil, der sich zu einem Absperrorgan 16 verjüngt, über welches das getrocknete Granulat in einen hier nicht gezeigten Förderer abgelassen werden kann, durch den das Granulat der weiteren Verarbeitung zugeführt wird. Die Trocknungsluft, die den Trocknungsbehälter 14 durchströmt hat und dabei mit Feuchtigkeit und Staub beladen wurde, tritt über einen Trocknungsluft-Rücklauf 18 aus dem Trocknungsbehälter aus und wird über eine Filterkaskade 20 in den Trockenlufterzeuger 10 zurückgeleitet.

Die Filterkaskade 20 umfasst einen Vorfilter 22 und einen Feinfilter 24, der dem Vorfilter in Strömungsrichtung gesehen nachgeschaltet ist und dessen Auslass mit dem Trockenlufterzeuger 10 verbunden ist.

Bei dem Vorfilter 22 handelt es sich um einen Patronenfilter mit einer Maschenweite in der Größenordnung von 3 bis 8 µm, der in seinem Aufbau den auch bisher in solchen Trockenluftsystemen eingesetzten Filtern entspricht. Der Feinfilter 24 ist im gezeigten Beispiel oberhalb des Vorfilters 22 an einer Konsole 26 montiert und enthält einen Filterkörper 28 aus dicht gepackten Glasfasern, die im wesentlichen in Strömungsrichtung der Luft orientiert sind. Zwischen den Glasfasern werden feine Poren gebildet, die eine mittlere Größe von nur etwa 0,1 µm haben, so dass auch gasförmige Substanzen aus der Trockenluft ausgefiltert werden können, insbesondere Substanzen, die durch Ausgasung von Additiven aus dem Kunststoffgranulat entstanden sind. Etwaige flüssige Substanzen, die ebenfalls in der Trockenluft mitgeführt und im Filterkörper 28 zurückgehalten werden, sammeln sich am Boden des Feinfilters 24 und können über einen Ablasshahn 30 abgelassen werden.

Die gefilterte Trockenluft, die wieder in den Trockenlufterzeuger 10 zurückgeleitet und dort regeneriert wird, ist somit weitgehend von den Additiven und den daraus entstandenen Substanzen befreit, wodurch der Aufbau von schädlichen Ablagerungen im Trocknungslufterzeuger 10 deutlich verzögert wird, so dass die Wartungsintervalle für den Trockenlufterzeuger 10 entsprechend vergrößert werden können.

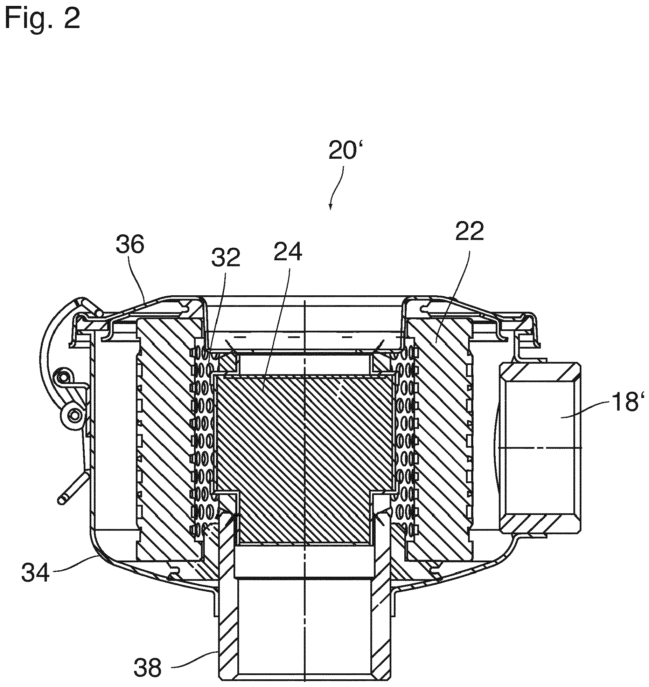

Fig. 2 zeigt einen Filter 20' für eine Ausführungsform, bei welcher der Vorfilter 22 und der Feinfilter 24 durch ein Lochblech 32 getrennt in einem gemeinsamen Gehäuse 34 untergebracht sind. Das Gehäuse 34 ist durch einen Deckel 36 verschließbar und weist eine Rohgaseintritt 18' auf, der mit dem Trockenluft-Rücklauf verbunden ist. Ein Reingasaustritt 38 ist mit dem Einlass des Trockenlufterzeugers verbunden.

## Patentansprüche

1. Trockenluftsystem für Granulattrockner, mit einem Trockenlufterzeuger (10), einem Trockenluft-Vorlauf (12) zum Einleiten von Trockenluft in einen Trocknungsbehälter (14), einem Trockenluft-Rücklauf (18) zum Zurückleiten von zu regenerierender Trockenluft vom Trocknungsbehälter (14) in den Trockenlufterzeuger (10), und einem im Trockenluft-Rücklauf (18) angeordneten Filter (20), **dadurch gekennzeichnet, dass** der Filter (20) einen Vorfilter (22) und einen nachgeschalteten Feinfilter (24) mit einer mittleren Porengröße von höchstens 0,3 µm aufweist.

2. Trockenluftsystem nach Anspruch 1, bei dem der Feinfilter (24) eine mittlere Porengröße von höchstens 0,15 µm, vorzugsweise etwa 0,1 µm hat.

3. Trockenluftsystem nach Anspruch 1 oder 2, bei dem der Feinfilter (24) einen durch dicht gepackte Glasfasern gebildeten Filterkörper (28) aufweist.

4. Trockenluftsystem nach Anspruch 3, bei dem die Glasfasern vorwiegend parallel zueinander in Strömungsrichtung des Mediums angeordnet sind.

5. Trockenluftsystem nach einem der vorstehenden Ansprüche, bei dem der Vorfilter (22) ein Staubfilter mit einer Maschenweite von 3 µm oder mehr ist.
